# EUROPEAN PATENT APPLICATION

(11) **EP 4 776 597 A1**
(43) Date of publication of application: **15.07.2026**
(21) Application number: 24870019.7
(22) Date of filing: 19.07.2024
(51) Int. Cl.: H04L 65/1016

(54) **COMMUNICATION METHOD, COMMUNICATION APPARATUS, AND COMMUNICATION SYSTEM**

(30) Priority: 30.09.2023 CN 202311287620
(71) Applicant: HUAWEI TECHNOLOGIES CO., LTD., Shenzhen, Guangdong 518129 (CN)
(72) Inventor: WANG, Han, Shenzhen, Guangdong 518129 (CN); CHAI, Xiaoqian, Shenzhen, Guangdong 518129 (CN); HAO, Hongxia, Shenzhen, Guangdong 518129 (CN)
(74) Representative: MERH-IP Matias Erny Reichl Hoffmann Patentanwälte PartG mbB
(86) International application number: PCT/CN2024/106502
(87) International publication number: WO 2025/066464

(57) **Abstract**

This application provides a communication method, a communication apparatus, and a communication system, and relates to the communication field. The method includes: receiving rich media information, and in response to an operation performed by a user on the rich media information, initiating a procedure of establishing a data channel. The rich media information includes indication information, and the indication information indicates to trigger establishment of the data channel. According to the solution provided in this application, a terminal can use the data channel in a context of rich media information interaction.

## Description

This application claims priority to Chinese Patent Application No. 2023112876203, filed with the China National Intellectual Property Administration on September 30, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the communication field, and specifically, to a communication method, a communication apparatus, and a communication system.

### BACKGROUND

With the development of communication technologies, communication messages between an enterprise and a user and between users are no longer simple SMS message texts. Because interactive information dissemination can be performed on pictures, sounds, videos, and the like, enhancing messages through rich media is becoming a development trend of the messages.

A rich communication suite (rich communication suite, RCS) message, also referred to as a rich media message, inherits advantages such as a classic message service number system, carrier-grade verification, wide coverage, and a high reach rate. Based on a global system for mobile communications association (global system for mobile communications association, GSMA) RCS and related standards, the rich communication suite message breaks through limitations on an information length and a content format of the conventional SMS message, and supports a plurality of media formats such as text, picture, audio, video, location, contact, and document. A messaging as a platform (messaging as a platform, MaaP) and a miniapp management platform are introduced, to promote convergence of the information communication industry with vertical industries. In addition, the rich media message may carry rich media information, to support various forms such as text, picture, audio, video, location, and contact.

Currently, in a context of an audio call or a video call, a terminal may interact with a peer terminal through a data channel (data channel) regarding all types of information such as multimedia (text, picture, audio, and video), file, location, and application. In a context of rich media information interaction, how the terminal uses such a data channel is a technical problem that needs to be resolved.

### SUMMARY

This application provides a communication method, a communication apparatus, and a communication system, so that a terminal can use a data channel in a context of rich media information interaction.

According to a first aspect, a communication method is provided. The method may be performed by a terminal, or may be performed by a component (for example, a processor, a chip, or a chip system) of the terminal, or may be implemented by a logical module or software that can implement all or a part of functions of the terminal.

The method includes: receiving rich media information, and in response to an operation performed by a user on the rich media information, initiating a procedure (procedure) of establishing a data channel. The rich media information includes indication information, and the indication information indicates to trigger establishment of the data channel.

For example, after receiving the rich media information, the method further includes: presenting the rich media information, that is, presenting the rich media information to the user. For example, the rich media information may be presented by using a display device like a display screen. It should be understood that, for the terminal, a form of the rich media information received by the terminal may be different from a form of the rich media information presented to the user, but substantive content is the same.

For example, the operation performed by the user on the rich media information may be, for example, a tap or a touch operation.

For example, receiving the rich media information includes: receiving a rich media message, where the rich media message includes the rich media information.

The data channel may be referred to as an IP multimedia subsystem (IP multimedia subsystem, IMS) data channel, which is associated with an IMS session of the terminal, or is created during the IMS session of the terminal, and is used to transmit, during IMS session lifetime, application data or an application program (used to generate/consume the application data) related to the terminal.

According to the communication method provided in this application, the terminal may initiate, based on the rich media information that carries the indication information for triggering establishment of the data channel, the procedure of establishing the data channel, so that the data channel can be used in a context of rich media information interaction. This method is a simple extension of an existing RCS protocol, and an existing IMS ecosystem is reused well, to effectively promote development of a rich media message ecosystem. In addition, the data channel is a part of a 3GPP packet switching (packet switching, PS) data off exempt service. A data channel application is supported in the forwarded or sent rich media information, so that the user can still use a service provided by the data channel application after the PS data is off. In addition, the rich media information may be carried in the rich media message. A rich media message service is based on a phone number of the user, and the service is carried on a telecom network. Compared with an internet application (for example, an OTT application), the data channel application on the rich media message is more secure and reliable.

In a possible implementation, the method further includes: obtaining authentication information of the terminal, where the authentication information indicates that enabling a function of the data channel is allowed.

In a possible implementation, the rich media information further includes information about the data channel application, and the information about the data channel application indicates a feature of the data channel application.

For example, the information about the data channel application may include one or more of the following: a data channel application identifier (identifier, ID), a data channel application name, a data channel application version, a data channel application operator, or a data channel application icon.

In a possible implementation, initiating the procedure of establishing the data channel includes: sending a session initiation protocol (session initiation protocol, SIP) invite request message to an IP multimedia subsystem (IP multimedia subsystem, IMS) core network device, where the SIP invite request message includes the information about the data channel application, the SIP invite request message is used to request to establish a bootstrap (bootstrap) data channel, and the bootstrap data channel is used for transmission of program information of the data channel application. For example, the bootstrap data channel is a data channel between the terminal and the IMS core network device.

According to this solution, the information about the data channel application is carried in the SIP invite request message, so that a data channel media network element may push the program information of the data channel application to the terminal after establishing the bootstrap data channel. There is no need for the terminal to first request the program information of the data channel application, and then the program information of the data channel application is sent to the terminal. This can reduce signaling overheads.

In a possible implementation, initiating the procedure of establishing the data channel includes: receiving, through the bootstrap data channel, the pushed program information of the data channel application.

Based on this solution, the program information of the data channel application is sent in a push manner, to reduce signaling overheads.

In a possible implementation, the indication information is address information of a data channel application server, or the rich media information includes the address information of the data channel application server.

In a possible implementation, initiating the procedure of establishing the data channel includes: sending a session initiation protocol SIP reinvite request message to the IMS core network device, where the SIP reinvite request message includes the address information of the data channel application server, the SIP reinvite request message is used to request to establish an application data channel, and the application data channel is used for transmission of data of the data channel application. For example, the application data channel is a data channel between terminals, or between the terminal and the IMS core network device, or between the terminal and the data channel application server.

According to a second aspect, a communication method is provided. The method may be performed by a rich media information sender, or may be performed by a component (for example, a processor, a chip, or a chip system) of the rich media information sender, or may be implemented by a logical module or software that can implement all or a part of functions of the rich media information sender. For example, the rich media information sender may be a terminal or a chatbot (Chatbot).

The method includes: generating rich media information, where the rich media information includes indication information, and the indication information indicates to trigger establishment of a data channel; and sending the rich media information.

According to the communication method provided in this application, the terminal may initiate, based on the received rich media information that carries the indication information for triggering establishment of the data channel, a procedure of establishing the data channel, so that the data channel can be used in a context of rich media information interaction. This method is a simple extension of an existing RCS protocol, and an existing IMS ecosystem is reused well, to effectively promote development of a rich media message ecosystem. In addition, the data channel is a part of a 3GPP PS data off exempt service. A data channel application is supported in the forwarded or sent rich media information, so that a user can still use a service provided by the data channel application after the PS data is off. In addition, the rich media information may be carried in a rich media message. A rich media message service is based on a phone number of the user, and the service is carried on a telecom network. Compared with an internet application (for example, an OTT application), the data channel application on the rich media message is more secure and reliable.

In a possible implementation, the rich media information further includes information about the data channel application, and the information about the data channel application indicates a feature of the data channel application.

For example, the information about the data channel application may include one or more of the following: a data channel application ID, a data channel application name, a data channel application version, a data channel application operator, or a data channel application icon.

In a possible implementation, the indication information is address information of a data channel application server, or the rich media information includes the address information of the data channel application server.

According to a third aspect, a communication method is provided. The method may be performed by an IMS core network device, may be performed by a component (for example, a processor, a chip, or a chip system) of the IMS core network device, or may be implemented by a logical module or software that can implement all or a part of functions of the IMS core network device.

The method includes: receiving a session initiation protocol SIP invite request message, where the SIP invite request message includes information about a data channel application, the information about the data channel application indicates a feature of the data channel application, the SIP invite request message is used to request to establish a bootstrap data channel, and the bootstrap data channel is used for transmission of program information of the data channel application; and sending the information about the data channel application to a data channel media network element based on the SIP invite request message in a process of establishing the bootstrap data channel. For example, the bootstrap data channel is a data channel between a terminal and the IMS core network device.

According to the communication method provided in this application, the information about the data channel application is carried in the SIP invite request message, so that the data channel media network element may push the program information of the data channel application to the terminal after establishing the bootstrap data channel. There is no need for the terminal to first request the program information of the data channel application, and then the program information of the data channel application is sent to the terminal. This can reduce signaling overheads.

In a possible implementation, the method further includes: receiving, through the bootstrap data channel, the program information that is of the data channel application and that is pushed by the data channel media network element; and sending the program information of the data channel application to the terminal.

According to a fourth aspect, a communication method is provided. The method may be performed by an IMS core network device, may be performed by a component (for example, a processor, a chip, or a chip system) of the IMS core network device, or may be implemented by a logical module or software that can implement all or a part of functions of the IMS core network device.

The method includes: receiving a session initiation protocol SIP reinvite request message, where the SIP reinvite request message includes address information of a data channel application server, the SIP reinvite request message is used to request to establish an application data channel, and the application data channel is used for transmission of data of a data channel application; and sending the address information of the data channel application server to a data channel signaling network element based on the SIP reinvite request message. For example, the application data channel is a data channel between terminals, or between the terminal and the IMS core network device, or between the terminal and the data channel application server.

According to the communication method provided in this application, the SIP reinvite request message may carry the address information of the data channel application server, to establish an application data channel with the data channel application server indicated by the address information of the data channel application server.

It should be understood that the method in the third aspect may be combined with the method in the fourth aspect.

According to a fifth aspect, a communication method is provided. The method may be performed by a data channel media network element, or may be performed by a component (for example, a processor, a chip, or a chip system) of the data channel media network element, or may be implemented by a logical module or software that can implement all or a part of functions of the data channel media network element.

The method includes: receiving resource reservation indication information from an IMS core network device, where the resource reservation indication information includes information about a data channel application, and the information about the data channel application indicates a feature of the data channel application; and sending program information of the data channel application to a terminal via the IMS core network device after establishing a bootstrap data channel based on the resource reservation indication information, where the bootstrap data channel is for transmission of the program information of the data channel application. For example, the bootstrap data channel is a data channel between the terminal and the IMS core network device.

According to the communication method provided in this application, the information about the data channel application is carried in the resource reservation indication information, so that the data channel media network element may push the program information of the data channel application to the terminal after establishing the bootstrap data channel. There is no need for the terminal to first request the program information of the data channel application, and then the program information of the data channel application is sent to the terminal. This can reduce signaling overheads.

According to a sixth aspect, a communication method is provided. The method includes: A rich media information sender generates rich media information, where the rich media information includes indication information, and the indication information indicates to trigger establishment of a data channel; the rich media information sender sends the rich media information to a terminal; the terminal receives the rich media information; and in response to an operation performed by a user on the rich media information, the terminal initiates a procedure of establishing the data channel.

According to the communication method provided in this application, the terminal may initiate, based on the received rich media information that carries the indication information for triggering establishment of the data channel, the procedure of establishing the data channel, so that the data channel can be used in a context of rich media information interaction. This method is a simple extension of an existing RCS protocol, and an existing IMS ecosystem is reused well, to effectively promote development of a rich media message ecosystem. In addition, the data channel is a part of a 3GPP PS data off exempt service. A data channel application is supported in the forwarded or sent rich media information, so that a user can still use a service provided by the data channel application after the PS data is off. In addition, the rich media information may be carried in a rich media message. A rich media message service is based on a phone number of the user, and the service is carried on a telecom network. Compared with an internet application (for example, an OTT application), the data channel application on the rich media message is more secure and reliable.

In a possible implementation, the rich media information further includes information about the data channel application, and the information about the data channel application indicates a feature of the data channel application.

In a possible implementation, that the terminal initiates the procedure of establishing the data channel includes: The terminal sends a session initiation protocol SIP invite request message to an IP multimedia subsystem IMS core network device, where the session initiation protocol SIP invite request message includes the information about the data channel application, the SIP invite request message is used to request to establish a bootstrap data channel, and the bootstrap data channel is used for transmission of program information of the data channel application; the IMS core network device receives the SIP invite request message; and the IMS core network device sends, based on the SIP invite request message, the information about the data channel application to a data channel media network element in a process of establishing the bootstrap data channel.

In a possible implementation, that the terminal initiates the procedure of establishing the data channel further includes: The terminal receives, via the IMS core network device, the program information that is of the data channel application and that is pushed by the data channel media network element.

In a possible implementation, the indication information is address information of a data channel application server, or the rich media information includes the address information of the data channel application server.

In a possible implementation, that the terminal initiates the procedure of establishing the data channel includes: The terminal sends a session initiation protocol SIP reinvite request message to the IP multimedia subsystem IMS core network device, where the SIP reinvite request message includes the address information of the data channel application server, the SIP reinvite request message is used to request to establish an application data channel, and the application data channel is used for transmission of data of the data channel application; the IMS core network device receives the SIP reinvite request message; and the IMS core network device sends the address information of the data channel application server to a data channel signaling network element based on the SIP reinvite request message.

For beneficial effects of the sixth aspect, refer to the descriptions of any one of the first aspect to the fifth aspect. Details are not described again in the sixth aspect.

According to a seventh aspect, a communication apparatus is provided and includes a module or unit configured to perform the method in any one of the first aspect or the possible implementations of the first aspect.

According to an eighth aspect, a communication apparatus is provided and includes a module or unit configured to perform the method in any one of the second aspect or the possible implementations of the second aspect.

According to a ninth aspect, a communication apparatus is provided and includes a module or a unit configured to perform the method in any one of the third aspect or the possible implementations of the third aspect, or includes a module or a unit configured to perform the method in any one of the fourth aspect or the possible implementations of the fourth aspect.

According to a tenth aspect, a communication apparatus is provided and includes a module or unit configured to perform the method in any one of the fifth aspect or the possible implementations of the fifth aspect.

According to an eleventh aspect, a communication apparatus is provided and includes a processor. When the processor executes a computer program (which may also be referred to as code or instructions) or instructions stored in a memory, the apparatus is caused to perform the method in any one of the foregoing aspects or the possible implementations of any one of the foregoing aspects.

In a possible implementation, the apparatus further includes the memory.

In a possible implementation, there are one or more processors, and/or one or more memories.

In a possible implementation, the memory and the processor may be integrated together, or the memory and the processor are disposed separately.

In a possible implementation, the apparatus further includes a communication interface, and the processor is coupled to the communication interface.

According to a twelfth aspect, a processor is provided and includes: an input circuit, an output circuit, and a processing circuit. The processing circuit is configured to receive a signal via the input circuit, and transmit a signal via the output circuit, so that the processor performs the method in any one of the foregoing aspects or any one of the possible implementations of any one of the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a thirteenth aspect, a communication system is provided. The system includes an apparatus configured to perform the method in any one of the first aspect or the possible implementations of the first aspect, an apparatus configured to perform the method in any one of the second aspect or the possible implementations of the second aspect, and an apparatus configured to perform the method in any one of the third aspect or the possible implementations of the third aspect. Alternatively, the system includes an apparatus configured to perform the method in any one of the first aspect or the possible implementations of the first aspect, an apparatus configured to perform the method in any one of the second aspect or the possible implementations of the second aspect, and an apparatus configured to perform the method in any one of the fourth aspect or the possible implementations of the fourth aspect. Optionally, the system further includes an apparatus configured to perform the method in any one of the fifth aspect or the possible implementations of the first aspect.

According to a fourteenth aspect, a computer program product is provided. The computer program product includes a computer program. When the computer program is run, a computer is caused to perform the method in any one of the foregoing aspects or the possible implementations of any one of the foregoing aspects.

According to a fifteenth aspect, a computer-readable storage medium is provided. The computer-readable storage medium stores a computer program (which may also be referred to as code or instructions). When the computer program is run on a computer, the computer is caused to perform the method in any one of the foregoing aspects or the possible implementations of any one of the foregoing aspects.

According to a sixteenth aspect, a chip is provided and includes a processor, configured to invoke a computer program from a memory and run the computer program, to cause a communication apparatus on which the chip is installed to perform the method in any one of the foregoing aspects or the possible implementations of any one of the foregoing aspects.

According to a seventeenth aspect, a communication apparatus is provided. The communication apparatus includes an interface and a processor. The interface is configured to send and/or receive a signal, to cause the processor to perform the method in any one of the foregoing aspects or the possible implementations of any one of the foregoing aspects.

### BRIEF DESCRIPTION OF DRAWINGS

FIG. 1 is a diagram of a rich media message architecture according to an embodiment of this application;
FIG. 2 is a diagram of an application scenario of a method according to this application;
FIG. 3 is a diagram of another rich media message architecture according to an embodiment of this application;
FIG. 4 is a schematic flowchart of a communication method according to an embodiment of this application;
FIG. 5 is an example of a rich media message according to an embodiment of this application;
FIG. 6 is a schematic flowchart of a communication method according to an embodiment of this application;
FIG. 7 is an example of a SIP invite request message according to an embodiment of this application;
FIG. 8 is another example of a SIP invite request message according to an embodiment of this application;
FIG. 9 is a schematic flowchart of a communication method according to this application;
FIG. 10 is a schematic flowchart of a communication method according to this application;
FIG. 11 is a schematic flowchart of a communication method according to this application;
FIG. 12 is an example of a SIP reinvite request message according to this application;
FIG. 13 is a block diagram of a communication apparatus according to this application; and
FIG. 14 is a block diagram of another communication apparatus according to this application.

### DESCRIPTION OF EMBODIMENTS

The following describes the technical solutions in embodiments of this application with reference to the accompanying drawings in embodiments of this application.

In the descriptions of this application, unless otherwise specified, "/" indicates that associated objects are in an "or" relationship. For example, A/B may represent A or B. The term "and/or" in this specification describes only an association relationship for describing associated objects and represents that three relationships may exist. For example, A and/or B may represent the following three cases: Only A exists, both A and B exist, and only B exists. A and B each may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

Sequence numbers do not mean execution sequences in various method embodiments of this application. The execution sequences should be determined based on functions and internal logic, and should not be construed as any limitation on the implementation processes of embodiments of this application.

It may be understood that, in this application, descriptions similar to "in a case that ...", "if ...", "when ...", "it is assumed that ...", and the like may be used interchangeably. In addition, these descriptions all mean corresponding processing performed in an objective situation, are not intended to limit a time, and do not require a determining action during implementation and do not mean that there is another limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application and the implementations/methods/implementation methods in embodiments, unless otherwise specified or a logical conflict occurs, terms and/or descriptions are consistent and may be mutually referenced between different embodiments and between the implementations/methods/implementation methods in embodiments. Technical features in the different embodiments and the implementations/methods/implementation methods in embodiments may be combined to form a new embodiment, implementation, method, or implementation method based on an internal logical relationship thereof. The following implementations of this application are not intended to limit the protection scope of this application.

The technical solutions in embodiments of this application may be applied to various communication systems, for example, a 5th generation (5th generation, 5G) system or a new radio (new radio, NR) system. The technical solutions provided in this application may be further applied to a future communication system, for example, a 6th generation mobile communication system. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

The following explains some basic concepts in embodiments of this application.
1. Rich media information is a formatted text used to describe multimedia content. The multimedia content includes any one or any combination of a plurality of forms of content such as text, picture, audio, video, location, and contact, and the formatted text may be parsed by a parsing engine on a terminal to present corresponding multimedia content. For example, the formatted text may be a text in a hypertext markup language (hypertext markup language, HTML) format, or may be a text in an extensible markup language (extensible markup language, XML) format.

The rich media information may also be referred to as rich media description information, a rich media script, or the like.

The rich media information may be transmitted by using a rich media message described below, or may be transmitted by using a simple mail transfer protocol (simple mail transfer protocol, SMTP) message or a hypertext transfer protocol (hypertext transfer protocol, HTTP) message. This is not limited in embodiments of this application. In embodiments of this application, that the rich media information is transmitted by using the rich media message is used as an example.

2. A rich media message is also referred to as a rich communication suite (rich communication suite, RCS) message. The rich media message complies with a rich media communication convergence.07 (rich communication convergence.07, RCC.07) standard and a rich media communication convergence.71 (rich communication convergence.71, RCC.71) standard that are released by the global system for mobile communications association (global system for mobile communications association, GSMA). The rich media message is an upgrade of a conventional SMS message. The rich media message inherits advantages such as a classic message service number system, carrier-grade verification, wide coverage, and a high reach rate. Based on a GSMA RCS and related standards, the rich media message breaks through limitations on an information length and a content format of the conventional SMS message, and supports a plurality of media formats such as text, picture, audio, video, location, contact, and document. A messaging as a platform (messaging as a platform, MaaP) is introduced, to promote convergence of the information communication industry with vertical industries.

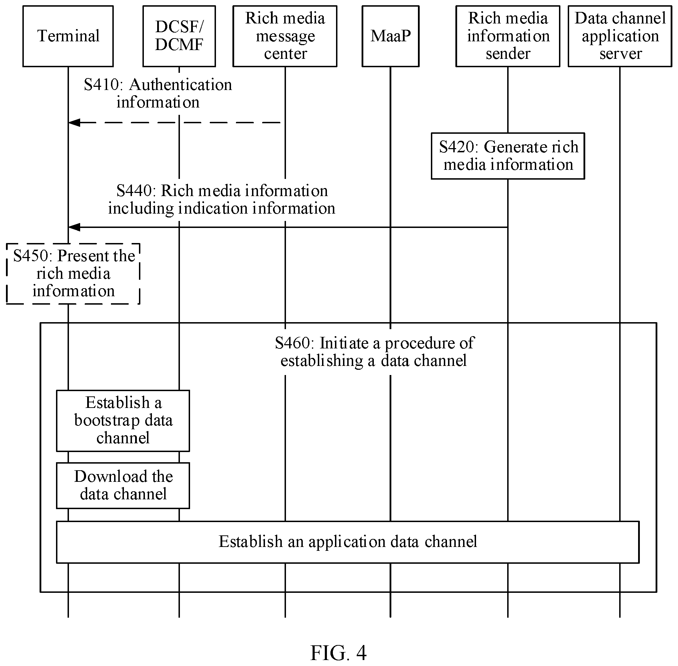

For a terminal user, the rich media message can provide point-to-point message and group chat services. The rich media message may carry rich media information (refer to FIG. 4), to support various forms such as text, picture, audio, video, location, and contact. For an industry customer, the rich media message can provide an enhanced message service between an individual and an application, to implement "messaging as a platform". In addition, a new message interaction mode, namely, chatbot, is introduced, in which a terminal is connected in a manner of a message dialog and services such as search, discovery, interaction, and payment can be provided in a dialog box. In this way, an interaction service between the industry customer such as an enterprise and the terminal user is implemented.

The rich media message may also be referred to as a 5G message (MSGin5G message). The rich media message may be used between internet of things devices. Therefore, the rich media message may also be referred to as a 5G internet of things message. It may be understood that, a specific name of the message does not limit the protection scope of embodiments of this application. For a uniform description, the following provides a description by using the rich media message.

3. A data channel (data channel, DC), which may also be referred to as an IMS data channel, is associated with an IMS session of a terminal, or is created during the IMS session of the terminal, and is used to transmit, during IMS session lifetime, application data or an application program (used to generate/consume the application data) related to the terminal.

For example, based on a relationship between a data channel and an audio/video call, the data channel may be classified into at least the following types:
(1) In an IMS session process, when an audio call or a video call exists between the terminal and another session participant (which may be another terminal or a network element on a network side), and a data channel also exists, the data channel may be referred to as an auxiliary data channel (auxiliary data channel), or a dependent data channel (dependent data channel).
(2) In an IMS session process, when only a data channel exists between the terminal and another session participant, and no conventional audio call or video call exists, the data channel may be referred to as a standalone data channel (standalone data channel) or an independent data channel (independent data channel).

The data channel in embodiments of this application mainly refers to the standalone data channel or the independent data channel.

4. A data channel application (data channel application, DCA) is an application program running on a terminal, and interacts with a data channel application server or a data channel application on another terminal. For example, the data channel application includes HTML, JavaScript, an image, a style sheet, or the like. The data channel application is a client of the data channel application server.

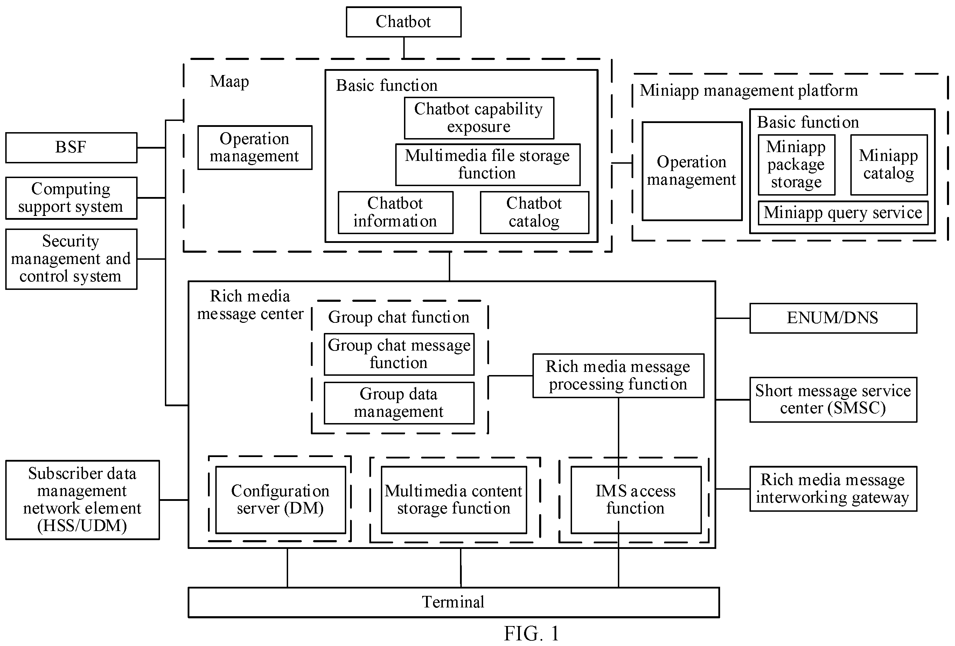

For example, FIG. 1 is a diagram of a rich media message architecture according to an embodiment of this application. As shown in FIG. 1, the architecture may include a terminal, a rich media message center, a MaaP, and a miniapp management server. The following briefly describes the devices.
1. The terminal can support a rich media message service.

It may be understood that the terminal is merely a name, and may also be generally referred to as a rich media message terminal, a 5G message terminal, an RCS client (RCS client), user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal may be a device that provides voice/data for a user, for example, a handheld device or a vehicle-mounted device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a compute device having a wireless communication function, another processing device or wearable device connected to a wireless modem, a terminal in a 5G network, or a terminal in a future evolved public land mobile network (public land mobile network, PLMN). This is not limited in embodiments of this application.

By way of example but not limitation, in embodiments of this application, the terminal may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of the user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal may be the terminal, or may be an apparatus that can support the terminal in implementing the function, for example, a chip system or a chip. The apparatus may be installed on the terminal. In embodiments of this application, the chip system may include a chip, or may include a chip and another discrete component.

2. The rich media message center has a capability of processing a rich media message, is connected to the MaaP, and provides an industry message function. As shown in FIG. 1, the rich media message center includes a plurality of logical functional modules. For example, the rich media message center includes a group chat function, a rich media message processing function, an IP multimedia subsystem (IP multimedia subsystem, IMS) access function, a multimedia content storage function, and a configuration server. The logical functional modules included in the rich media message center may be independently deployed (that is, these logical functional modules may be deployed on different physical devices), or may be deployed together (that is, these functional modules are deployed on a same physical device, or are built in the rich media message center). This is not limited in embodiments of this application. Functions of the example logical functional modules included in the rich media message center are as follows.
(1) An IMS access function is mainly responsible for signaling access and media access and forwarding of the rich media message of a user.
(2) A rich media message processing function is mainly used to process receiving and sending of a personal message, an industry message, and an enhanced call message, and perform session management, message-related service function processing, and the like.
(3) A multimedia content storage function is mainly used to store a multimedia message file sent by an individual user.
(4) A configuration server, also referred to as device management (device management, DM), is mainly configured to store user service-related data, such as a protocol parameter and a service parameter. The terminal can access the configuration server to obtain related data, to perform service configuration on the terminal.
(5) A group chat function may include a group chat message function and group data management. The group chat message function may be used to distribute a group chat message. The group data management may be used to implement functions such as creating a group, inviting others to join a group, deleting a group member, dismissing a group, transferring permission of an administrator, setting a group name, and setting a group profile picture. In addition, the group data management may be further used to store and manage group chat-related data information, such as a group member list, a group name, a group profile picture, and a group member identity.

The rich media message center may be connected to user data management (for example, a home subscriber server (home subscriber server, HSS) and a unified data management (unified data management, UDM) network element), an SMS center (to be specific, a short message service center (short message service center, SMSC)), a rich media message interworking gateway, phone number mapping (E.164 Number URI Mapping, ENUM) or a domain name system (domain name system, DNS), a security management and control system, a service support system, a bootstrapping server (bootstrapping server function, BSF), and the like.

The rich media message center may also be referred to as a 5G message center (5G message center, 5GMC), or may be referred to as an RCS service provider network (RCS service provider network). The following uses the rich media message center as an example for description.

3. The MaaP is connected to the rich media message center, to provide an industry message function and bear an interactive rich media message service. As shown in FIG. 1, the MaaP may include a basic function and operation management. The operation management is mainly used by an operator to manage a chatbot (Chatbot), such as enabling the chatbot and configuring permission. The chatbot is a display form of an industry message application in a rich media message, simulates human beings to make an intelligent conversation, and provides an industry message service function for a user. The basic function may include the following example logical functional modules.
(1) A chatbot directory is mainly used to summarize chatbot data information, provide algorithm services such as matching and sorting, process a chatbot discovery request from a user, and return a search result to a user.
(2) Chatbot information is mainly used to store related information of the chatbot, and process chatbot information query from a user. The related information may include information about an enterprise that provides the chatbot, for example, a name, a trademark, a service type, and a contact method. The related information may further include information about the chatbot or an application, for example, chatbot usage, application usage, and developer information.
(3) A multimedia file storage function is mainly used to store a multimedia message file delivered by the chatbot.
(4) Chatbot capability exposure is mainly used to perform abstract encapsulation on rich media message capabilities together, to provide a message access capability for the chatbot.

Similarly, the logical functional modules included in the MaaP may be independently deployed, or may be deployed together. This is not limited in embodiments of this application.

For example, the MaaP may be connected to an SMSC, a rich media message interworking gateway, an ENUM or a DNS, a security management and control system, a service support system, a BSF, and the like.

4. A miniapp (MiniApp) management platform is mainly used to review, authenticate, and release a miniapp of an industry customer, summarize and store miniapp information, provide a miniapp query service for a terminal, and store a miniapp package. The miniapp is an application program that is implemented based on a web technology (web technology) (for example, JavaScript) and that can run in a host mobile application program (or a host client) on a terminal without being installed on the terminal. The host mobile application program (or the host client) can run only after being installed on the terminal, and generally may run a plurality of (types of) miniapps.

The miniapp management platform may also be referred to as the miniapp management server, or referred to as a rich media miniapp management server or a rich media miniapp management platform. For a uniform description, the following provides a description by using the miniapp management platform.

The miniapp management server may be independently deployed, or may be built in a MaaP. This is not limited. As shown in FIG. 1, the miniapp management platform may include the following logical functional modules.
(1) Operation management is mainly used to review whether the miniapp complies with a miniapp development specification, authenticate the miniapp, and release the miniapp. A user can query for the miniapp only after the miniapp is released.
(2) Miniapp package storage (that is, rich media message miniapp package storage) is mainly used to store a miniapp package.
(3) A miniapp catalog (that is, a rich media message miniapp catalog) is mainly used to summarize and store miniapp information. The miniapp information may include basic information about the miniapp, for example, an identifier (identifier, ID), a name, an icon, and a version. The miniapp information may further include detailed information about the miniapp, for example, a provider (an industry customer), a service type, a contact method, a website, a purpose, and developer information of the miniapp.
(4) A miniapp query service (namely, a rich media message miniapp query service) is mainly used to process a miniapp query request from a terminal, provides algorithm services such as matching and sorting, and returns a query result to a user. The query result may include the miniapp information queried based on a miniapp keyword, for example, an ID, a name, an icon, and a version.

Currently, in a context of an audio call or a video call, the terminal may interact with a peer terminal through a data channel (data channel) regarding all types of information such as multimedia (text, picture, audio, and video), file, location, and application. In a context of rich media information interaction, how the terminal uses such a data channel is a technical problem that needs to be resolved.

In view of this, this application provides a communication method. A terminal may initiate, based on rich media information that carries indication information for triggering establishment of a data channel, a procedure of establishing the data channel, so that the data channel can be used in a context of rich media information interaction. This method is a simple extension of an existing RCS protocol, and an existing IMS ecosystem is reused well, to effectively promote development of a rich media message ecosystem.

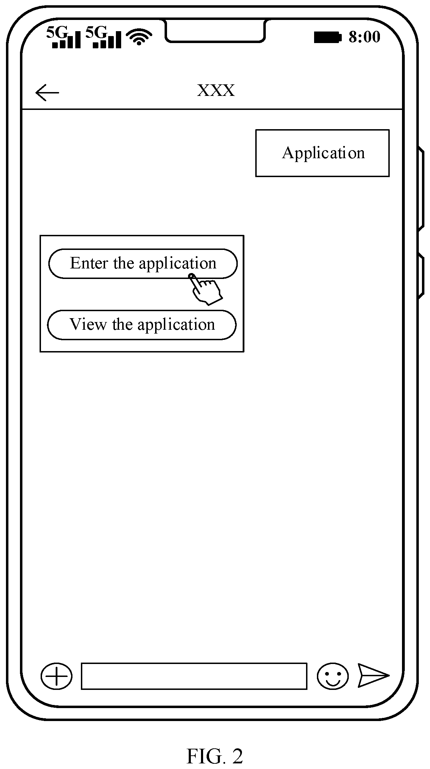

For example, FIG. 2 is a diagram of an application scenario of the method according to this application. Refer to FIG. 2. A user consults a chatbot about commodity information. The chatbot can send information about only one commodity by using one message. The user wants to browse a plurality of commodities at a time for selective shopping, and therefore sends an "application" to a customer service. After receiving the message sent by the user, the chatbot sends, to the user, rich media information that carries indication information for triggering establishment of a data channel. For example, the customer sends a download address of a shopping application A (that is, an example of a data channel application) used for shopping. After receiving the information, a terminal parses the information, and presents, to the user, information including an "enter the application" option and a "view details" option. After the user taps or touches the "enter the application" option, the terminal is to establish the data channel, and after the data channel is established, presents a user interface of the shopping application A to the user. It should be understood that the user may alternatively tap or touch the "view the application" option to view related information of the shopping application A, for example, an application name and an application version.

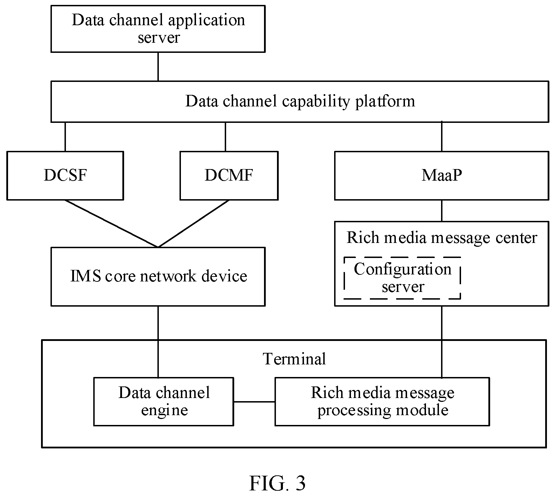

FIG. 3 is a diagram of another rich media message architecture according to an embodiment of this application. The method provided in this application may be applied to the architecture shown in FIG. 3. As shown in FIG. 3, the architecture may include: a terminal, a rich media message center, a MaaP, a data channel application server, a DCSF, a DCMF, an IP multimedia subsystem (IP multimedia subsystem, IMS) core network (Core) device, and a data channel capability platform layer. For the terminal, the rich media message center, and the MaaP, refer to the foregoing descriptions. The following describes other network elements in the architecture shown in FIG. 3.
1. The data channel application server functions as a server of a data channel application, processes data channel traffic, and provides background services (or network-side services) for the data channel application.
2. The DCSF, to be specific, a data channel signaling function (data channel signaling function), may provide a control capability of a data channel.

The DCSF may also be referred to as a data channel signaling network element/apparatus, or the like. It should be understood that different names should not constitute any limitation on the protection scope of this application.

3. The DCMF, to be specific, a data channel media function (data channel media function), may provide a data channel resource management capability externally.

The DCMF may also be referred to as a data channel media network element/apparatus, or the like. It should be understood that different names should not constitute any limitation on the protection scope of this application.

In addition, the DCMF in this application may alternatively be replaced with an enhanced (enhanced) MRF. The MRF is a media resource function (media resource function). The enhanced MRF may provide the data channel resource management capability externally, and the data channel resource management capability is added to an existing MRF. It should be understood that the enhanced MRF may also be referred to as an enhanced media resource network element/apparatus, a media resource network element/apparatus, or the like. It should be understood that different names should not constitute any limitation on the protection scope of this application.

4. The IMS core network device completes a signaling control function in an IMS multimedia call session process.

For example, an IMS center may include network elements such as a proxy call session control function (proxy call session control function, P-CSCF), a serving call session control function (serving call session control function, S-CSCF), and an interrogation call session control function (interrogation call session control function, I-CSCF). For specific content of the IMS center, refer to a conventional technology. Details are not described herein.

In embodiments of this application, the IMS core network device is sometimes also referred to as an IMS core network.

5. The data channel capability platform layer is an eMMTel enabler layer in the 3GPP, and is mainly used to manage the data channel application server and expose a core network capability to the data channel application server. The MaaP may obtain information about a data channel application via the data channel capability platform layer.

It should be understood that in this application, communication between the IMS core network device, the MaaP, and the data channel application server is implemented through forwarding by the data channel capability platform.

In addition, in an example, the terminal may include a rich media message processing module and a data channel engine. The data channel engine may be built in the rich media message processing module, or may be independent of the rich media message processing module. Main functions of the data channel engine include parsing the rich media message, triggering data channel negotiation, and downloading and running the data channel application. The rich media message processing module may be configured to receive, send, and process a message, present an application, and the like.

The following describes in detail the method provided in embodiments of this application with reference to the architecture shown in FIG. 3. It should be understood that some terms in this application are described above. Details are not described in the following embodiments.

FIG. 4 is a diagram of a communication method 400 according to an embodiment of this application. The method 400 may include S420, S440, and S460. The following describes the steps.

S420: A rich media information sender generates rich media information.

S440: The rich media information sender sends the rich media information to a terminal, and correspondingly, the terminal receives the rich media information from the rich media information sender.

The rich media information sender may be an industry customer or another terminal. For example, in the scenario shown in FIG. 2, the rich media information sender is the industry customer. The industry customer may send the rich media information to the terminal via a MaaP and a rich media message center in a form of a chatbot message. The another terminal may send the rich media information to the rich media information terminal via the rich media message center.

The rich media information includes indication information, and the indication information indicates to trigger establishment of a data channel. In this application, that the indication information indicates to trigger establishment of the data channel may be replaced with that the indication information indicates to trigger data channel negotiation.

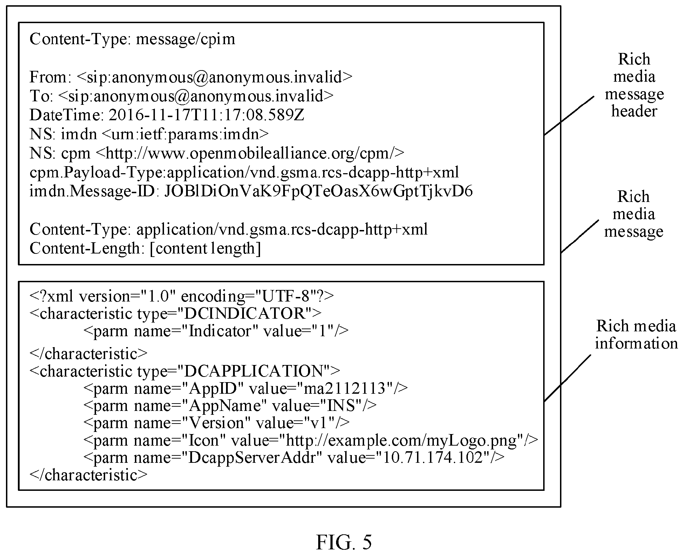

In an example, the indication information is a specific indication in the rich media information, for example, "DCINDICATOR" in FIG. 5.

In another example, the rich media information includes address information of a data channel application server, and the indication information is the address information. For example, the address information may be "DcappServerAddr" in FIG. 5. In other words, if the rich media information carries the address information, the address information may indicate to trigger establishment of the data channel.

It should be understood that establishing the data channel includes establishing a bootstrap data channel (bootstrap data channel), downloading a data channel application, and establishing an application data channel (application data channel). The bootstrap data channel is used for transmission of program information of the data channel application, that is, is used to download the data channel application. After the bootstrap data channel is established, the terminal may download the data channel application through the bootstrap data channel. Then, the terminal may establish the application data channel. The application data channel is used for transmission of data of the data channel application. After the application data channel is established, the data channel application may be used or run.

Based on the foregoing descriptions, it may be understood that the data channel application is a data channel application downloaded in a process of establishing the data channel.

Optionally, the rich media information may further include information about the data channel application, where the information about the data channel application indicates a feature of the data channel application. For example, the information about the data channel application may include one or more of the following: a data channel application ID, a data channel application name, a data channel application version, a data channel application operator, a data channel application icon, or the like. For example, in the scenario shown in FIG. 2, the information about the data channel application may be viewed by using the "view the application" option.

For example, the rich media information may be sent by using a rich media message.

For example, the rich media information may be sent by using a rich media message shown in FIG. 5. Refer to FIG. 5. The rich media message includes a rich media message header and rich media information. "gsma.rcs-dcapp-http+xml" in the rich media message header is a newly added content type (content type), indicating that rich media message body XML data includes information related to establishment of the data channel. For example, in the rich media message shown in FIG. 5, the information related to establishment of the data channel includes: "DcappServerAddr", the information about the data channel application, and the address information of the data channel application server (that is, "DcappServerAddr").

DcappServerAddr: If the rich media message includes "DCINDICATOR", establishment of the data channel can be triggered. If the rich media message does not carry "DCINDICATOR" but carries the address information of the data channel application server "DcappServerAddr", "DcappServerAddr" can trigger establishment of the data channel.

Information about the data channel application: "AppID" value="ma2112113", "AppName" value="INS", and "Version" value="v1" in the rich media information are the information about the data channel application. "AppID" value="ma2112113" indicates that the data channel application ID is "ma2112113"; "AppName" value="INS" indicates that the data channel application name is "INS"; and "Version" value="v1" indicates that the data channel application version is "v1".

Address information of the data channel application server is "DcappServerAddr" in the rich media information. The address information is used for negotiation of a data channel between the data channel application server and a DCMF in an application data channel negotiation process. If the rich media information does not carry the address information, address information that is of the data channel application server and that is configured by an operator may be used.

S460: In response to an operation performed by a user on the rich media information, the terminal initiates a procedure of establishing the data channel.

It should be understood that the rich media information on which the user operation is performed is information presented by the terminal to the user, and a form of the rich media information may be different from a form of the rich media information received by the terminal, but substantive content is the same.

The operation may be, for example, a tap or touch operation. After the user taps or touches the rich media information, the terminal is to initiate the procedure of establishing the data channel. The procedure of establishing the data channel includes establishing the bootstrap data channel, downloading the data channel application, and establishing the application data channel. After the data channel is established, the user can use a service provided by the data channel application, for example, transmitting a picture and performing a video call.

For example, in the scenario shown in FIG. 2, after the user taps or touches the "enter the application" option, the terminal may establish the data channel.

In a possible implementation, before S460, the method 400 may further include the following step.

S450: The terminal presents the rich media information.

Specifically, after receiving the rich media information, the terminal parses the rich media information. If the rich media information includes the indication information, the rich media information may be converted into a form that can be identified and operated by the user, and then presented to the user. For example, the terminal may present the user interface shown in FIG. 2.

In a possible implementation, the method 400 may further include the following steps.

S410: The terminal obtains authentication information.

The authentication information indicates whether enabling a function of the data channel is allowed. For example, the authentication information may also be referred to as data channel authentication information.

For example, the terminal may construct a default configuration server network domain name (for example, a fully qualified domain name (fully qualified domain name, FQDN)) based on mobile country code (mobile country code, MCC) information and mobile network code (mobile network code, MNC) information in an international mobile subscriber identity (international mobile subscriber identity, IMSI). For example, the constructed configuration server network domain name is config.rcs.mnc.mcc.pub.3gppnetwork.org. Then, the terminal sends a message, for example, an HTTP/HTTPS message, to a configuration server to request configuration information of the terminal. Correspondingly, the configuration server sends the configuration information of the terminal to the terminal. The configuration information includes the authentication information, and the authentication information is used to control authorization of a service provider on a data channel application service. For example, if the authentication information is 0, it indicates that enabling the function of the data channel is not allowed; and if the authentication information is 1, it indicates that enabling the function of the data channel is allowed. Alternatively, meanings of 0 and 1 may be opposite.

When the method 400 includes S410, in S460, the terminal may determine whether the authentication information indicates that enabling the function of the data channel is allowed. If enabling the function of the data channel is allowed, the terminal parses the received rich media information, for example, parses whether the rich media message shown in FIG. 5 carries the indication information (for example, "DCINDICATOR"). If the indication information is carried, the procedure of establishing the data channel can be initiated; or if the indication information is not carried, the procedure of establishing the data channel cannot be initiated. It should be understood that S410 may be performed before S420, or may be performed after S420. For example, the terminal may obtain the authentication information in a startup process, or the terminal may obtain the authentication information after receiving the rich media information.

It should be understood that the method 400 may include both S410 and S450, or may include only one of S410 and S450, or may not include S410 and S450.

According to the communication method provided in this application, the terminal may initiate, based on the received rich media information that carries the indication information for triggering establishment of the data channel, the procedure of establishing the data channel, so that the data channel can be used in a context of rich media information interaction. This method is a simple extension of an existing RCS protocol, and an existing IMS ecosystem is reused well, to effectively promote development of a rich media message ecosystem. In addition, the data channel is a part of a 3GPP PS data off exempt service. The data channel application is supported in the forwarded or sent rich media information, so that the user can still use a service provided by the data channel application after PS data is off. In addition, the rich media information may be carried in the rich media message. A rich media message service is based on a phone number of the user, and the service is carried on a telecom network. Compared with an internet application (for example, an OTT application), the data channel application on the rich media message is more secure and reliable.

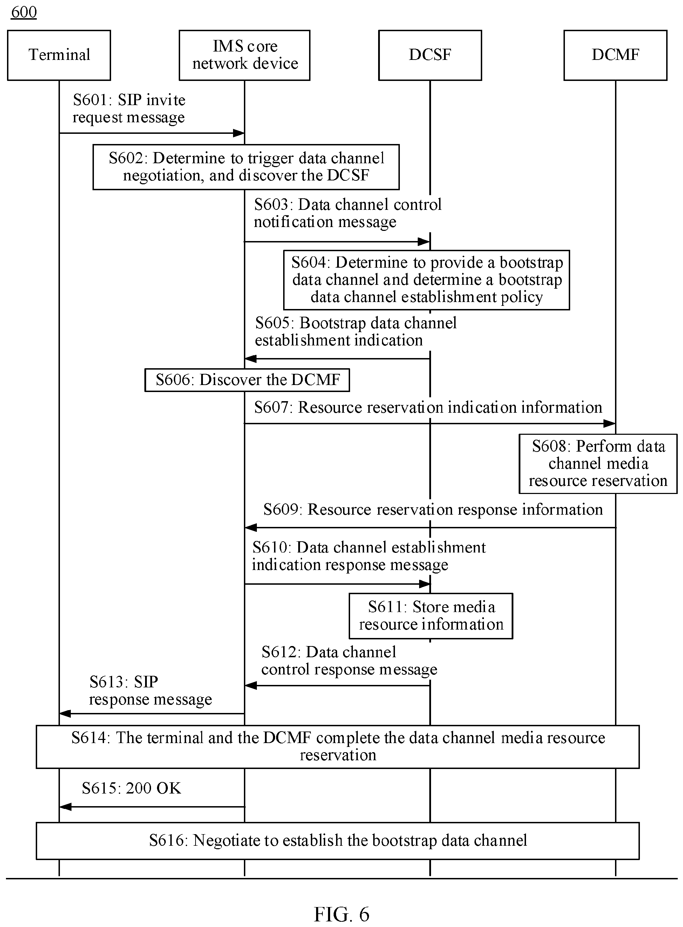

With reference to FIG. 6, the following describes a procedure of establishing a bootstrap data channel. It should be noted that, how to establish the bootstrap data channel is not specifically limited in embodiments of this application. The method shown in FIG. 6 is merely a manner of establishing the bootstrap data channel, and the bootstrap data channel may alternatively be established in another proper manner.

FIG. 6 is a schematic flowchart of a communication method according to this application. A bootstrap data channel may be established according to the method 600. The following describes steps in the method 600.

S601: A terminal sends a SIP invite (INVITE) request message to an IMS core network device to initiate creation of an IMS session, and correspondingly, the IMS core network device receives the SIP invite request message.

The SIP invite request message is used to request to establish a bootstrap data channel. For example, the SIP invite request message may include a bootstrap data channel establishment request. The bootstrap data channel is used for transmission of a data channel application, that is, for transmission of program information of the data channel application.

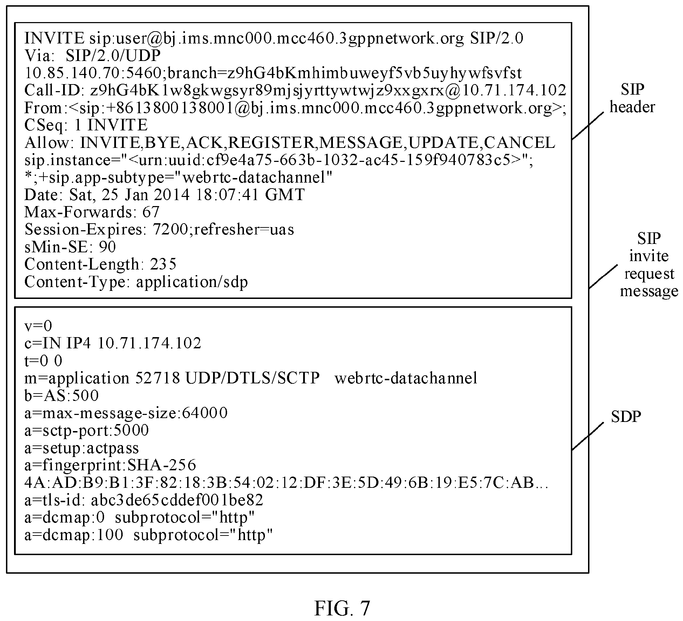

For example, an example of the SIP invite message is shown in FIG. 7. Refer to FIG. 7. The SIP invite message includes a SIP header and an SDP. An "m" line in the SDP part, that is, "m=application 52718 UDP/DTLS/SCTP webrtc-datachannel", indicates that a data channel media type is supported. In addition, an "a" line in the SDP indicates a data channel attribute.

Optionally, the SIP invite request message may further include information about the data channel application. For the information about the data channel application, refer to the foregoing descriptions of S420. Details are not described herein again.

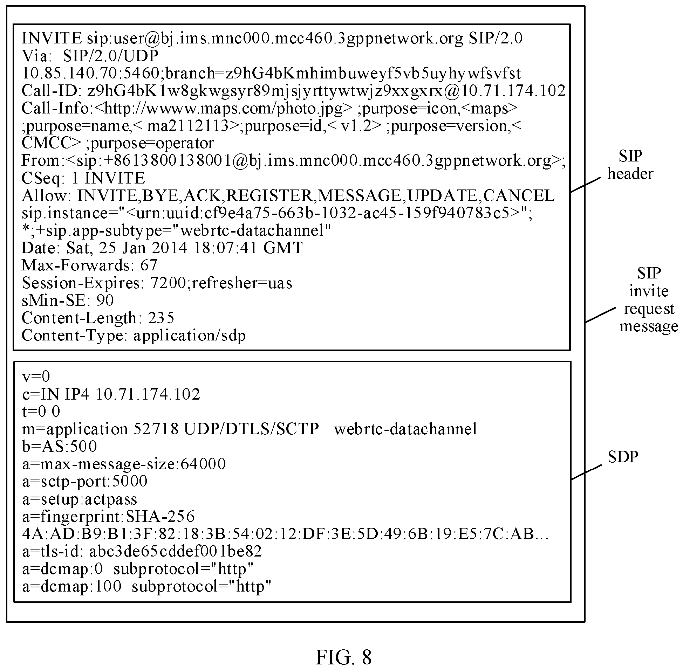

For example, another example of the SIP invite request message is shown in FIG. 8. Refer to FIG. 8. Compared with the SIP invite request message shown in FIG. 7, "Call-Info:<http://wwww.maps.com/photo.jpg> ;purpose=icon,<maps> ;purpose=name,< ma2112113>;purpose=id,< v1.2>" is added in a SIP header in the SIP invite request message, where the content is the information about the data channel application.

S602: The IMS core network device determines, based on user subscription data, to trigger data channel negotiation, and discovers a DCSF based on a local configuration or a 5G network element discovery mechanism.

After receiving the SIP invite request message, the IMS core network device learns, by parsing the SIP invite request message, that the terminal requests to establish the bootstrap data channel. Then, the IMS core network device views the user subscription data, and determines whether the terminal subscribes to a data channel service from an operator. If the data channel service is subscribed to, the data channel negotiation is triggered, and the DCSF that needs to perform data channel negotiation is determined.

S603: The IMS core network device sends a data channel control notification message to the DCSF, and correspondingly, the DCSF receives the data channel control notification message.

The data channel control notification message indicates to establish the bootstrap data channel.

Optionally, the data channel control notification message may further include the information about the data channel application. For example, when the SIP invite request message in S601 carries the information about the data channel application, the data channel control notification message may include the information about the data channel application.

S604: The DCSF determines, based on the data channel control notification message and an operator policy, to provide the bootstrap data channel and determines a bootstrap data channel establishment policy.

S605: The DCSF sends a bootstrap data channel establishment indication (including the bootstrap data channel establishment policy) to the IMS core network device to indicate how to establish the bootstrap data channel.

For example, the DCSF may send the bootstrap data channel establishment policy to the IMS core network device by invoking a service of the IMS core network device. The bootstrap data channel establishment policy indicates to initiate establishment of the bootstrap data channel with a DCMF as a target point, and IP/port (port) information used for media communication with the DCMF on the DCSF.

S606: The IMS core network device discovers the DCMF based on the local configuration or the 5G network element discovery mechanism.

S607: The IMS core network device sends resource reservation indication information to the DCMF, and correspondingly, the DCMF receives the resource reservation indication information.

After receiving the bootstrap data channel establishment policy from the DCSF, the IMS core network device invokes a DCMF service, and sends the resource reservation indication information to the DCMF to indicate the DCMF to perform data channel media resource reservation.

Optionally, the resource reservation indication information may further include the information about the data channel application. For example, when the SIP invite request message in S601 carries the information about the data channel application, the resource reservation indication information may include the information about the data channel application.

S608: The DCMF performs data channel media resource reservation based on the received resource reservation indication information.

S609: The DCMF returns a resource reservation response message to the IMS core network device, and correspondingly, the IMS core network device receives the resource reservation response message from the DCMF. The resource reservation response message indicates that the DCMF is performing data channel media resource reservation.

S610: The IMS core network device sends a data channel establishment indication response message to the DCSF, and correspondingly, the DCSF receives the data channel establishment indication response message. The data channel establishment indication response message indicates a data channel media resource reservation situation and media resource information on the DCMF.

S611: The DCSF stores the media resource information in the data channel establishment indication response message.

S612: The DCSF sends a data channel control response message to the IMS core network device, and correspondingly, the IMS core network device receives the data channel control response message.

The data channel control response message is a response to the data channel control notification message in S603. The data channel control response message may indicate that control signaling negotiation of the data channel is completed.

S613: The IMS core network device sends a SIP response message to the terminal, where the SIP response message indicates that the IMS core network device supports the data channel.

For example, the SIP response message is an 18X response message.

For example, an example of the 18X response message is shown in FIG. 8.

S614: The terminal and the DCMF complete the data channel media resource reservation.

S615: The IMS core network device returns 200 OK to the terminal, where the 200 OK indicates that the IMS session has been established.

S616: The terminal and the DCMF negotiate to establish the bootstrap data channel.

In conclusion, according to the communication method shown in FIG. 6, the bootstrap data channel may be established.

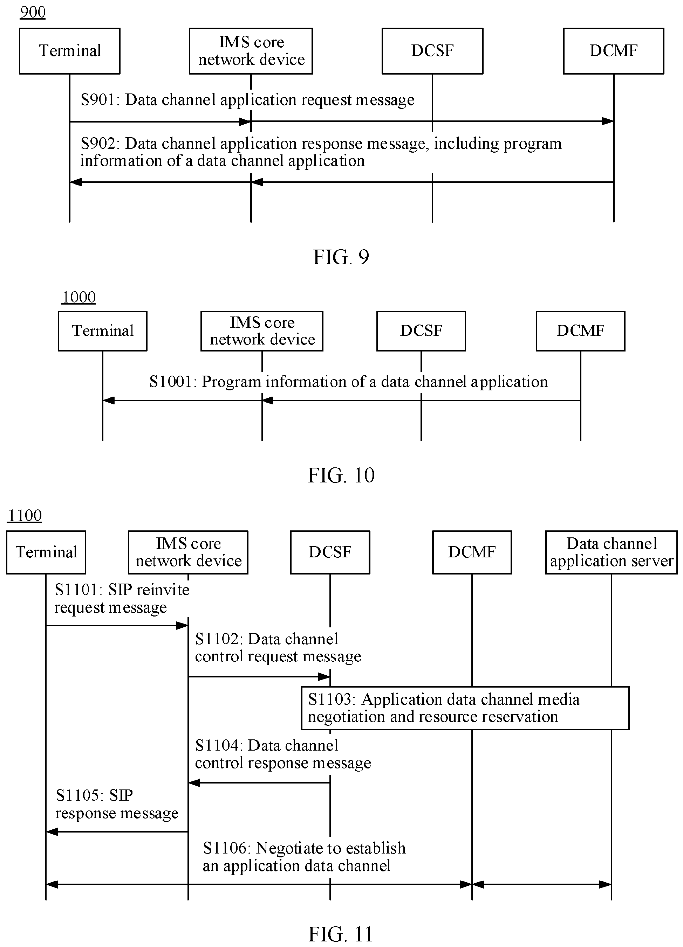

After the bootstrap data channel is established, the terminal may download the data channel application/transmit the program information of the data channel application through the established bootstrap data channel. For example, the data channel application may be downloaded by using a method shown in FIG. 9.

FIG. 9 is a schematic flowchart of a communication method according to this application. The method 900 may be applied to a scenario in which the resource reservation indication information in S607 does not include the information about the data channel application. The following describes steps in the method 900.

S901: A terminal sends a data channel application request message to a DCMF through an established bootstrap data channel.

The data channel application request message is used to request to establish an application data channel. The application data channel is used for transmission of data of the data channel application.

The data channel application request message may include the information about the data channel application in S440. For details about the information about the data channel application, refer to the descriptions of S440. Details are not described herein again.

For example, the data channel application request message is a data channel application get request message.

For example, an example of the data channel application request message is as follows:
GET /?appname=Ins&version=1&verder=CMCC HTTP/1.1
If-None-Match: ma2112113

S902: The DCMF sends a data channel application response message to the terminal. The data channel application response message includes program information of the data channel application.

For example, the DCMF may return the program information of the data channel application to the terminal by using 200 OK.

For example, an example of the data channel application response message is as follows:
HTTP/1.1 200 OK
Content-Type: application/zip
Content-Length: 2506
ETag: ma2112113

Binary file data of a data channel application zip package

According to the method 900 provided in this application, the terminal may obtain the program information of the data channel application by requesting a network.

FIG. 10 is a schematic flowchart of a communication method according to this application. The method 1000 may be applied to a scenario in which the resource reservation indication information in S607 includes the information about the data channel application. The method may include S1001.

S1001: A DCMF sends program information of a data channel application to a terminal.

Specifically, if the resource reservation indication information in S607 includes the information about the data channel application, the DCMF may push the program information of the data channel application to the terminal in an http push manner.

For example, an example of a message pushed by the DCMF to the terminal is as follows:
HTTP/2 server push
Content-Type: application/zip
Content-Length: 2506
ETag: ma21718

Binary file data of a data channel application zip package

According to the method 1000 provided in this application, a network may provide the program information of the data channel application to the terminal in a push manner. Compared with the method 900 shown in FIG. 9, this can reduce signaling overheads.

After the program information of the data channel application is obtained by using the method shown in FIG. 9 or FIG. 10, the terminal may establish an application data channel with a data channel application server based on the program information of the data channel application, to exchange traffic of the data channel application.

For example, FIG. 11 is a schematic flowchart of a communication method according to this application. According to the method 1100 shown in FIG. 11, a terminal may establish an application data channel with a data channel application server. The following describes steps in the method 1100.

S1101: The terminal sends a SIP reinvite (reINVITE) request message to an IMS core network device, and correspondingly, the IMS core network device receives the SIP reinvite request message.

The SIP reinvite request message is used to request to establish the application data channel. For example, the SIP reinvite request message may include an application data channel establishment request.

Optionally, the SIP reinvite request message may include address information of the data channel application server.

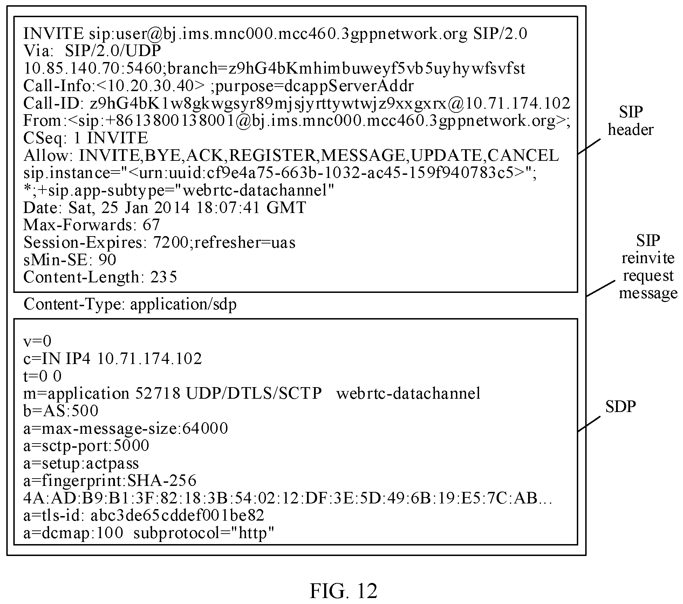

For example, an example of the SIP reinvite request message is shown in FIG. 12. Refer to FIG. 12. The SIP reinvite request message includes a SIP header and an SDP. "Call-Info:<10.20.30.40> ;purpose=dcappServerAddr" in the SIP header is the address information of the data channel application server. An "m" line in the SDP part, that is, "m=application 52718 UDP/DTLS/SCTP webrtc-datachannel", indicates that data channel media or a data channel service is supported. In addition, an "a" line in the SDP indicates a data channel attribute.

S1102: The IMS core network device sends a data channel control request message to a DCSF based on the SIP reinvite request message.

For example, the data channel control request message indicates to establish the application data channel.

Optionally, the data channel control request message may include the address information of the data channel application server.

S1103: After receiving the data channel control request message, the DCSF performs application data channel media negotiation and resource reservation with a DCMF and the data channel application server.

If the data channel control request message in S1102 does not carry the address information of the data channel application server, in S1103, application data channel media negotiation and resource reservation are performed with a data channel application server configured by an operator.

If the data channel control request message in S1102 carries the address information of the data channel application server, in S1103, application data channel media negotiation and resource reservation may be performed with the data channel application server indicated by the address information that is of the data channel application server and that is carried in the data channel control request message.

S1104: The DCSF sends a data channel control response message to the IMS core network device.

For example, the DCSF invokes an IMS core network service to send the data channel control response message to the IMS core network device. The data channel control response message indicates that the application data channel media negotiation and the resource reservation are completed.

S1105: The IMS core network device sends a SIP response message to the terminal, where the SIP response message indicates that a network side supports a data channel.

For example, the SIP response message is a 200 OK response message.

S1106: The terminal and the data channel application server establish, through negotiation via the DCMF, the application data channel.

It should be understood that, if the data channel control request message in S1102 does not carry the address information of the data channel application server, the terminal establishes the application data channel with the data channel application server configured by the operator. If the data channel control request message in S1102 carries the address information of the data channel application server, the terminal may establish the application data channel with the data channel application server indicated by the address information that is of the data channel application server and that is carried in the data channel control request message.

According to the method 1100 provided in this application, the terminal and the data channel application server may establish the application data channel. After the application data channel is established, a user may use a data channel application or use a service or a business provided by the data channel application.

It should be understood that a procedure of establishing the data channel is invisible to the user, and the terminal presents an enabled data channel application to the user, for example, the application A in FIG. 2.

It may be understood that the steps shown in the foregoing flowcharts are merely examples for description, and are not strictly limited herein. In addition, sequence numbers of the foregoing processes do not mean execution sequences. The execution sequences of the processes need to be determined based on functions and internal logic of the processes, and should not constitute any limitation on the implementation processes of embodiments of this application.

It may be further understood that some message names in embodiments of this application do not limit the protection scope of embodiments of this application.

It may be further understood that some optional features in embodiments of this application may be independent of other features in some scenarios, or may be combined with other features in some scenarios. This is not limited.

It may be further understood that, in the foregoing method embodiments, the method and the operation implemented by the device may alternatively be implemented by a component (such as a chip or a circuit) of the device. This is not limited.

In correspondence to the method provided in the foregoing method embodiments, an embodiment of this application further provides a corresponding apparatus. The apparatus includes a corresponding module configured to perform the foregoing method embodiments. The module may be software, hardware, or a combination of the software and the hardware. It may be understood that the technical features described in the method embodiments are also applicable to the following apparatus embodiments.

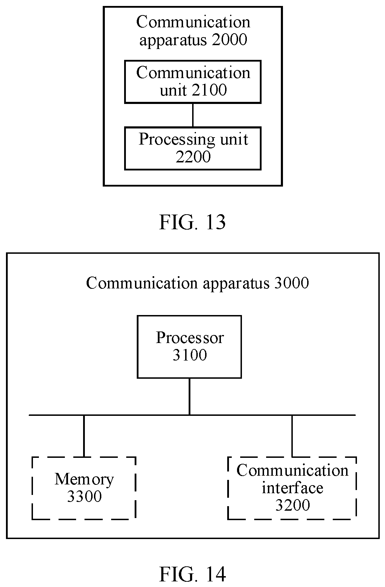

FIG. 13 is a diagram of a communication apparatus 2000 according to an embodiment of this application. The communication apparatus 2000 may include a communication unit 2100 and a processing unit 2200. The communication unit 2100 may implement a corresponding communication function. The communication may be internal communication of the communication apparatus 2000, or may be communication between the communication apparatus 2000 and another apparatus. The processing unit 2200 may implement a corresponding processing function. The communication unit 2100 may also be referred to as a communication interface or a transceiver unit. Optionally, the communication apparatus 2000 may further include a storage unit. The storage unit may be configured to store instructions and/or data. The processing unit 2200 may read the instructions and/or the data in the storage unit, so that the apparatus implements the foregoing method embodiments.

In a first design, the communication apparatus 2000 may be the terminal in the foregoing embodiments, or may be a module or a chip used in the terminal. The communication apparatus 2000 may be configured to perform steps or procedures performed by the terminal in the foregoing manner embodiments. The communication unit 2100 may be configured to perform a receiving and sending-related operation (for example, an operation of sending and/or receiving data or a message) of the terminal in the foregoing method embodiments. The processing unit 2200 may be configured to perform a processing-related operation of the terminal in the foregoing method embodiments, or an operation other than receiving and sending (for example, an operation other than sending and/or receiving data or a message).

In a possible implementation, the communication unit 2100 is configured to receive rich media information, where the rich media information includes indication information, and the indication information indicates to trigger establishment of a data channel; and the processing unit 2200 is configured to: in response to an operation performed by a user on the rich media information, initiate a procedure of establishing the data channel.

Optionally, the communication unit 2100 is further configured to obtain authentication information of a terminal, where the authentication information indicates that enabling a function of the data channel is allowed.

Optionally, the processing unit 2200 is further configured to present the rich media information.

Optionally, the rich media information further includes information about a data channel application, where the information about the data channel application indicates a feature of the data channel application.

Optionally, the processing unit 2200 is specifically configured to control the communication unit 2100 to send a session initiation protocol SIP invite request message to an IP multimedia subsystem IMS core network device, where the SIP invite request message includes the information about the data channel application, the SIP invite request message is used to request to establish a bootstrap data channel, and the bootstrap data channel is used for transmission of program information of the data channel application.

Optionally, the pushed program information of the data channel application is received through the bootstrap data channel.

Optionally, the indication information is address information of a data channel application server, or the rich media information includes the address information of the data channel application server.

Optionally, the processing unit 2200 is specifically configured to control the communication unit 2100 to send a session initiation protocol SIP reinvite request message to the IP multimedia subsystem IMS core network device, where the SIP reinvite request message includes the address information of the data channel application server, the SIP reinvite request message is used to request to establish an application data channel, and the application data channel is used for transmission of data of the data channel application.

Optionally, the communication unit 2100 is specifically configured to receive a rich media message, where the rich media message includes the rich media information.

In a second design, the communication apparatus 2000 may be a rich media information sender in the foregoing embodiments, or may be a module or a chip used in the rich media information sender. The communication apparatus 2000 may be configured to perform the steps or procedures performed by the rich media information sender in the foregoing embodiments. The communication unit 2100 may be configured to perform a receiving and sending-related operation (for example, an operation of sending and/or receiving data or a message) of the rich media information sender in the foregoing method embodiments. The processing unit 2200 may be configured to perform a processing-related operation of the rich media information sender in the foregoing method embodiments, or an operation other than receiving and sending (for example, an operation other than sending and/or receiving data or a message).

In a possible implementation, the processing unit 2200 is configured to generate rich media information, where the rich media information includes indication information, and the indication information indicates to trigger establishment of a data channel; and the communication unit 2100 is configured to send the rich media information.

Optionally, the rich media information further includes information about a data channel application, where the information about the data channel application indicates a feature of the data channel application.

Optionally, the indication information is address information of a data channel application server, or the rich media information includes the address information of the data channel application server.

In a third design, the communication apparatus 2000 may be the IMS core network device in the foregoing embodiments, or may be a module or a chip used in the IMS core network device. The communication apparatus 2000 may be configured to perform steps or procedures performed by the IMS core network device in the foregoing manner embodiments. The communication unit 2100 may be configured to perform a receiving and sending-related operation (for example, an operation of sending and/or receiving data or a message) of the IMS core network device in the foregoing method embodiments. The processing unit 2200 may be configured to perform a processing-related operation of the IMS core network device in the foregoing method embodiments, or an operation other than receiving and sending (for example, an operation other than sending and/or receiving data or a message).

In a possible implementation, the communication unit 2100 is configured to receive a session initiation protocol SIP invite request message, where the SIP invite request message includes information about a data channel application, the information about the data channel application indicates a feature of the data channel application, the SIP invite request message is used to request to establish a bootstrap data channel, and the bootstrap data channel is used for transmission of program information of the data channel application; and the processing unit 2200 is configured to control, based on the SIP invite request message in a process of establishing the bootstrap data channel, the communication unit 2100 to send the information about the data channel application to a data channel media network element.

Optionally, the communication unit 2100 is further configured to receive, through the bootstrap data channel, the program information that is of the data channel application and that is pushed by the data channel media network element, and send the program information of the data channel application to a terminal.

In a possible implementation, the communication unit 2100 is configured to receive a session initiation protocol SIP reinvite request message, where the SIP reinvite request message includes address information of a data channel application server, the SIP reinvite request message is used to request to establish an application data channel, and the application data channel is used for transmission of data of a data channel application; and the processing unit 2200 is configured to send the address information of the data channel application server to a data channel signaling network element based on the SIP reinvite request message.

It should be understood that the communication apparatus 2000 may further perform other operations performed by the terminal, the IMS core network device, the MaaP, the DCSF, the DCMF, or the data channel application server in the foregoing method embodiments, or may be a module or a chip used in the terminal, the IMS core network device, the MaaP, the DCSF, the DCMF, or the data channel application server. The communication apparatus 2000 may be configured to perform the steps or procedures performed by the terminal, the IMS core network device, the MaaP, the DCSF, the DCMF, or the data channel application server in the foregoing methods.

For details of steps or procedures performed by the units in the communication apparatus 2000, refer to the descriptions in the corresponding methods. Details are not described herein again.

It should be understood that the "unit" in the communication apparatus 2000 may be implemented by hardware, or may be implemented by software, or may be implemented by hardware executing corresponding software. For example, the "unit" may refer to an application-specific integrated circuit (application-specific integrated circuit, ASIC), an electronic circuit, a processor (for example, a shared processor, a dedicated processor, or a group processor) configured to execute one or more software or firmware programs, a memory, a merge logic circuit, and/or another appropriate component that supports the described function. For another example, the communication unit 2100 may alternatively be a transceiver or a transceiver circuit (which, for example, may include a receiver circuit and a transmitter circuit), and the processing unit 2200 may alternatively be a processor or a processing circuit.

FIG. 14 is a block diagram of another communication apparatus 3000 according to an embodiment of this application. The communication apparatus 3000 may be any communication apparatus in the foregoing method embodiments, for example, the terminal, a rich media information sender, the IMS core network device, the MaaP, the DCSF, the DCMF, or the data channel application server, or may be a chip, a chip system, a processor, or the like that supports the communication apparatus (for example, the terminal, the rich media information sender, the IMS core network device, the MaaP, the DCSF, the DCMF, or the data channel application server). The apparatus may be configured to implement the method described in the foregoing method embodiments. For details, refer to the descriptions in the foregoing method embodiments.

The communication apparatus 3000 may include one or more processors 3100. The processor 3100 may also be referred to as a processing unit, and may implement a specific control function. The processor 3100 may be a general-purpose processor, a dedicated processor, or the like. For example, the processor 3100 may be a baseband processor or a central processing unit. The baseband processor may be configured to process a communication protocol and communication data. The central processing unit may be configured to control the communication apparatus, execute a software program, and process data of the software program.

In an optional design, the processor 3100 may also store instructions and/or data, and the instructions and/or the data may be run by the processor 3100, to cause the communication apparatus 3000 to perform the methods described in the foregoing method embodiments.

In another optional design, the communication apparatus 3000 may include a communication interface 3200 configured to implement receiving and sending functions. For example, the communication interface 3200 may be a transceiver circuit, an interface, an interface circuit, or a transceiver. The transceiver circuit, the interface, the interface circuit, or the transceiver configured to implement the receiving function and the sending function may be separated, or may be integrated together. The transceiver circuit, the interface, the interface circuit, or the transceiver may be configured to read and write code/data, or the transceiver circuit, the interface, the interface circuit, or the transceiver may be configured to transmit or transfer a signal.

Optionally, the communication apparatus 3000 may include one or more memories 3300. The memory may store instructions. The instructions may be run on the processor 3100, to cause the communication apparatus 3000 to perform the method described in the foregoing method embodiments. Optionally, the memory 3300 may further store data. Optionally, the processor 3100 may also store instructions and/or data. The processor 3100 and the memory 3300 may be disposed separately, or may be integrated together.

It should be understood that, in a possible design, steps in the method embodiments provided in embodiments of this application may be completed by using a hardware integrated logic circuit in a processor or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be completed by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

An embodiment of this application further provides a computer program product. The computer program product includes computer program code. When the computer program code is run on a computer, the computer is caused to perform steps or procedures performed by the terminal, the rich media information sender, the IMS core network device, the MaaP, the DCSF, the DCMF, or the data channel application server in any one of the foregoing method embodiments.

An embodiment of this application further provides a computer-readable storage medium. The computer-readable storage medium stores program code. When the program code is run on a computer, the computer is caused to perform steps or procedures performed by the terminal, the rich media information sender, the IMS core network device, the MaaP, the DCSF, the DCMF, or the data channel application server in any one of the foregoing method embodiments.

An embodiment of this application further provides a communication apparatus, including a processor and an interface. The interface is configured to send and/or receive a signal, so that the processor performs steps or procedures performed by the terminal, the rich media information sender, the IMS core network device, the MaaP, the DCSF, the DCMF, or the data channel application server in any one of the foregoing method embodiments.

This application further provides a communication system, including one or more of the following: a terminal, a rich media information sender, an IMS core network device, a MaaP, a DCSF, a DCMF, or a data channel application server.

The foregoing apparatus embodiments are in full correspondence with the method embodiments, and corresponding modules or units perform corresponding steps. For example, a communication unit or a communication interface performs a receiving step or a sending step in the method embodiments, and a processing unit or a processor may perform a step other than the sending step and the receiving step.

In embodiments of this application, the terms and English acronyms/abbreviations are all examples given for ease of description, and shall not constitute any limitation on this application. Embodiments of this application do not exclude a possibility of defining another term that can implement same or similar functions in an existing or future protocol.

Terminologies such as "component", "module", and "system" used in this specification are used to indicate computer-related entities, hardware, firmware, combinations of hardware and software, software, or software being executed. For example, the component may be, but is not limited to, a process that runs on a processor, a processor, an object, an executable file, an execution thread, a program, and/or a computer. As illustrated by using figures, both an application and a compute device runs on the compute device may be components. One or more components may reside within a process and/or an execution thread, and a component may be located on one computer and/or distributed between two or more computers. In addition, these components may be executed from various computer-readable storage media having various data structures stored thereon. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with illustrative logical blocks (illustrative logical blocks) and steps (steps) described in embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

In the foregoing embodiments, all or some of the functions of the functional units may be implemented by using software, hardware, firmware, or any combination thereof. When software is used to implement embodiments, all or a part of embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

When the functions are implemented in the form of a software functional unit and sold or used as an independent product, the functions may be stored in a computer-readable storage medium. Based on such an understanding, the technical solutions of embodiments of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving rich media information, wherein the rich media information comprises indication information, and the indication information indicates to trigger establishment of a data channel; and
in response to an operation performed by a user on the rich media information, initiating a procedure of establishing the data channel.

2. The method according to claim 1, wherein the method further comprises:
obtaining authentication information of a terminal, wherein the authentication information indicates that enabling a function of the data channel is allowed.

3. The method according to claim 1 or 2, wherein before the initiating the procedure of establishing the data channel, the method further comprises:
presenting the rich media information.

4. The method according to any one of claims 1 to 3, wherein the rich media information further comprises information about a data channel application, and the information about the data channel application indicates a feature of the data channel application.

5. The method according to claim 4, wherein the initiating the procedure of establishing the data channel comprises:
sending a session initiation protocol SIP invite request message to an IP multimedia subsystem IMS core network device, wherein the SIP invite request message comprises the information about the data channel application, the SIP invite request message is used to request to establish a bootstrap data channel, and the bootstrap data channel is used for transmission of program information of the data channel application.

6. The method according to claim 5, wherein the initiating the procedure of establishing the data channel comprises:
receiving, through the bootstrap data channel, the pushed program information of the data channel application.

7. The method according to any one of claims 1 to 6, wherein the indication information is address information of a data channel application server, or the rich media information comprises the address information of the data channel application server.

8. The method according to claim 7, wherein the initiating the procedure of establishing the data channel comprises:
sending a session initiation protocol SIP reinvite request message to the IP multimedia subsystem IMS core network device, wherein the SIP reinvite request message comprises the address information of the data channel server, the SIP reinvite request message is used to request to establish an application data channel, and the application data channel is used for transmission of data of the data channel application.

9. The method according to any one of claims 1 to 8, wherein the receiving the rich media information comprises:
receiving a rich media message, wherein the rich media message comprises the rich media information.

10. A communication method, wherein the method comprises:
generating rich media information, wherein the rich media information comprises indication information, and the indication information indicates to trigger establishment of a data channel; and
sending the rich media information.

11. The method according to claim 10, wherein the rich media information further comprises information about a data channel application, and the information about the data channel application indicates a feature of the data channel application.

12. The method according to claim 10 or 11, wherein the indication information is address information of a data channel application server, or the rich media information comprises the address information of the data channel application server.

13. A communication method, comprising:
receiving a session initiation protocol SIP invite request message, wherein the SIP invite request message comprises information about a data channel application, the information about the data channel application indicates a feature of the data channel application, the SIP invite request message is used to request to establish a bootstrap data channel, and the bootstrap data channel is used for transmission of program information of the data channel application; and
sending the information about the data channel application to a data channel media network element based on the SIP invite request message in a process of establishing the bootstrap data channel.

14. The method according to claim 13, wherein the method further comprises:
receiving, through the bootstrap data channel, the program information that is of the data channel application and that is pushed by the data channel media network element; and
sending the program information of the data channel application to a terminal.

15. A communication method, comprising:
receiving a session initiation protocol SIP reinvite request message, wherein the SIP reinvite request message comprises address information of a data channel application server, the SIP reinvite request message is used to request to establish an application data channel, and the application data channel is used for transmission of data of data channel application; and
sending the address information of the data channel application server to a data channel signaling network element based on the SIP reinvite request message.

16. A communication method, comprising:
generating, by a rich media information sender, rich media information, wherein the rich media information comprises indication information, and the indication information indicates to trigger establishment of a data channel;
sending, by the rich media information sender, the rich media information to a terminal;
receiving, by the terminal, the rich media information; and
in response to an operation performed by a user on the rich media information, initiating, by the terminal, a procedure of establishing the data channel.

17. The method according to claim 16, wherein the rich media information further comprises information about a data channel application, wherein the information about the data channel application indicates a feature of the data channel application.

18. The method according to claim 17, wherein the initiating, by the terminal, the procedure of establishing the data channel comprises:
sending, by the terminal, a session initiation protocol SIP invite request message to an IP multimedia subsystem IMS core network device, wherein the SIP invite request message comprises the information about the data channel application, the SIP invite request message is used to request to establish a bootstrap data channel, and the bootstrap data channel is used for transmission of program information of the data channel application;
receiving, by the IMS core network device, the SIP invite request message; and
sending, by the IMS core network device, the information about the data channel application to a data channel media network element based on the SIP invite request message in a process of establishing the bootstrap data channel.

19. The method according to claim 18, wherein the initiating, by the terminal, the procedure of establishing the data channel further comprises:
receiving, by the terminal via the IMS core network device, the program information that is of the data channel application and that is pushed by the data channel media network element.

20. The method according to any one of claims 16 to 19, wherein the indication information is address information of a data channel application server, or the rich media information comprises the address information of the data channel application server.

21. The method according to claim 20, wherein the initiating, by the terminal, the procedure of establishing the data channel comprises:
sending, by the terminal, a session initiation protocol SIP reinvite request message to the IP multimedia subsystem IMS core network device, wherein the SIP reinvite request message comprises the address information of the data channel application server, the SIP reinvite request message is used to request to establish an application data channel, and the application data channel is used for transmission of data of the data channel application;
receiving, by the IMS core network device, the SIP reinvite request message; and
sending, by the IMS core network device, the address information of the data channel application server to a data channel signaling network element based on the SIP reinvite request message.

22. A communication apparatus, comprising a unit configured to perform steps of the method according to any one of claims 1 to 9.

23. A communication apparatus, comprising a unit configured to perform steps of the method according to any one of claims 10 to 12.

24. A communication apparatus, comprising a unit configured to perform steps of the method according to claim 13 or 14, or claim 15.

25. A communication apparatus, comprising a processor, wherein when the processor executes a program or instructions stored in a memory, the apparatus is caused to perform the method according to any one of claims 1 to 9, any one of claims 10 to 12, claim 13 or 14, or claim 15.

26. A communication apparatus, comprising a processor and an interface, wherein the interface is configured to send and/or receive a signal, to cause the processor to perform the method according to any one of claims 1 to 9, any one of claims 10 to 12, claim 13 or 14, or claim 15.

27. A communication system, comprising a terminal, a rich media information sender, and an IP multimedia subsystem IMS core network device, wherein the terminal is configured to perform the method according to any one of claims 1 to 9, the rich media information sender is configured to perform the method according to any one of claims 10 to 12, and the IMS core network device is configured to perform the method according to claim 13 or 14, or claim 15.

28. A computer-readable storage medium, wherein the computer-readable storage medium stores a computer program or instructions, and when the computer program or the instructions are executed, a computer is caused to perform the method according to any one of claims 1 to 9, any one of claims 10 to 12, claim 13 or 14, or claim 15.

29. A computer program product, comprising computer program instructions, wherein the computer program instructions cause the computer to perform the method according to any one of claims 1 to 9, any one of claims 10 to 12, claim 13 or 14, or claim 15.
